Europäisches Patentamt

European Patent Office

Office européen des brevets

(19)

(11) Numéro de publication: **0 112 752**
**A1**

## DEMANDE DE BREVET EUROPEEN

(12)

(21) Numéro de dépôt: 83402334.3

(22) Date de dépôt: 05.12.83

(51) Int. Cl.³: **B 23 K 37/04**

(30) Priorité: 08.12.82 FR 8220537

(43) Date de publication de la demande: 04.07.84
Bulletin 84/27

(84) Etats contractants désignés: **CH DE FR GB IT LI**

(71) Demandeur: **KLEY-FRANCE, Société Anonyme dite:,
74, Avenue Pablo Picasso, F-92000 Nanterre (FR)**

(72) Inventeur: **Daviet, Didier, 74, Avenue Pablo Picasso,
F-92000 Nanterre (FR)**

(74) Mandataire: **Roger-Petit, Jean-Camille et al, OFFICE
BLETRY 2, Boulevard de Strasbourg, F-75010 Paris (FR)**

(54) **Dispositif de serrage et d'arrondissage pour le raboutage des tubes de gros diamètres.**

(57) Dispositif de serrage et d'arrondissage pour le raboutage de tubes (9a, 9b) de gros diamètre, comprenant un arbre central (6) et deux unités de serrage et d'arrondissage (7a et 7b) supportées côte à côte dans le sens axial par l'arbre central, chaque unité (7a, 7b) comportant plusieurs segments de serrage et de mise en forme (8a, 8b), qui sont répartis circonférentiellement autour de l'axe de l'arbre central et qui sont mobiles radialement entre une position interne de repos et une position externe de travail, et des moyens d'actionnement reliés auxdits segments pour les déplacer en synchronisme et comprenant plusieurs vérins de poussée (11a, 11b) orientés radialement et reliés fonctionnellement auxdits segments (8a, 8b) respectivement, et des moyens de commande (21a-28a, 21b-28b) associés auxdits vérins de poussée pour synchroniser les mouvements de leurs tiges de piston (10a, 10b).

## Dispositif de serrage et d'arrondissage pour le raboutage des tubes de gros diamètre

La présente invention concerne la technique de raboutage des tubes de gros diamètre, en particulier des tubes d'oléoduc ou de gazoduc.

Pour le raboutage des tubes de ce genre, les deux tubes à rabouter sont placés bout à bout et maintenus dans cette position par deux unités de serrage, pendant que les extrémités adjacentes des deux tubes sont raccordées l'une à l'autre par un cordon circulaire de soudure (voir le brevet US N° 3 031 994). Chaque unité de serrage comprend habituellement plusieurs mors qui sont répartis circonférentiellement autour de l'axe de l'un des deux tubes et qui sont serrés contre la paroi cylindrique interne dudit tube à proximité de son extrémité devant être raccordée à l'extrémité de l'autre tube. Les mors ont seulement une fonction de serrage. Or, les tubes ont rarement une section parfaitement ronde, mais présentent souvent une légère ovalisation, de sorte que, avant de raccorder les deux tubes par soudage, il faut presque toujours faire tourner l'un des deux tubes par rapport à l'autre de façon à orienter au mieux leurs ovalisations respectives dans le même sens. Ceci complique les opérations de raboutage, et il arrive même parfois que les deux tubes ont des degrés différents d'ovalisation tels qu'ils ne peuvent pas être raccordés entre eux et qu'il faut choisir un autre tube.

Pour remédier à cet inconvénient, la Demanderesse a récemment proposé et commercialisé un dispositif de serrage et d'arrondissage comprenant un arbre central et deux unités de serrage et d'arrondissage supportées côte à côte dans le sens axial par l'arbre central, chaque unité comportant plusieurs segments de serrage et de mise en forme, qui sont répartis circonférentiellement autour de l'axe de l'arbre central et qui sont mobiles radialement entre une position interne de repos et une position externe de travail, et des moyens d'actionnement reliés auxdits segments pour appliquer à chacun d'eux une poussée dirigée radialement vers l'extérieur et pour les déplacer en synchronisme et de la même quantité de ladite position de repos à ladite position de travail (voir aussi les brevets FR N° 2 485 974 et 2 305 268 et le brevet US N° 3 896 655). Dans un tel dispositif, les segments de serrage et de mise en forme de chaque unité de serrage et d'arrondissage ont, tous ensemble, une étendue circonférentielle presque égal à 360° quand ils sont dans leur position de travail. En outre, ils sont soumis à une très forte poussée radiale de façon à avoir à la fois une action de serrage et une action d'arrondissage du tube. Ainsi, les inconvénients susmentionnés des dispositifs de serrage antérieurement connus sont éliminés.

Dans le dispositif de serrage et d'arrondissage déjà commercialisé par la Demanderesse (voir aussi le brevet US N° 3 896 655, figures 1 à 8C, et le brevet FR N° 2 305 268), les moyens d'actionnement de chaque unité de serrage et d'arrondissage comprennent un unique vérin de poussée, orienté axialement, qui agit sur un cône de poussée, mobile axialement, lequel agit à son tour sur plusieurs coins, mobiles radialement, qui sont répartis circonférentiellement et auxquels sont respectivement fixés les segments de serrage et de mise en forme. Le cône et les coins convertissent la poussée axiale du vérin de poussée en plusieurs poussées radiales. Du fait même de cette conversion, le rendement est relativement mauvais et, comme il faut appliquer aux segments de serrage et de mise en forme une poussée relativement importante (plus de 100 bars) pour permettre un arrondissage de chaque tube, il faut utiliser un très gros vérin de poussée. Ce dernier est lourd et coûteux à fabriquer. En outre, le cône et les coins doivent être capables de résister aux efforts considérables auxquels ils sont soumis en fonctionnement, de sorte qu'ils doivent être réalisés sous la forme de pièces massives. En outre, les coins doivent être guidés par rapport au cône. Ce guidage est habituellement réalisé par des assemblages du type à tenons et rainures à section en queue d'aronde ou en T. Les cônes de poussée et les coins sont donc des pièces usinées coûteuses. Il en résulte que le dispositif de serrage et d'arrondissage antérieurement connu de la Demandresse constitue un ensemble relativement coûteux, volumineux et lourd, donc difficile à supporter à l'intérieur des tubes à rabouter, surtout si ceux-ci sont de grande longueur, et difficile à positionner par rapport à la jonction devant être réalisée entre les deux tubes. A titre indicatif, le dispositif de serrage et d'arrondissage antérieurement commercialisé par la Demanderesse pesait 2550 kg dans le cas d'un dispositif conçu pour rabouter des tubes de 968,4 mm.

Dans le brevet FR N° 2 485 974 et le brevet US N° 3 896 655, (figures 9 et 10), lesdits moyens d'actionnement comprennent plusieurs vérins de poussée, orientés radialement et reliés fonctionnement auxdits segments, respectivement. Chaque vérin de poussée comprend un cylindre relié rigidement à l'arbre central et ayant une extrémité radialement interne et une extrémité radialement externe, un piston mobile dans le cylindre, et une tige de piston montée coulissante dans l'extrémité externe du cylindre et ayant une extrémité interne reliée au piston et une extrémité externe reliée à l'un des segments de l'unité correspondante de serrage et d'arrondissage.

Dans le brevet FR N° 2 485 974 (page 4, ligne 31 à page 5, ligne 8), il est indiqué que la synchronisation hydraulique est obtenue grâce à une centrale hydraulique réalisée spécifiquement à cet effet, et que, à tout moment, les tiges de piston des vérins sont expansées de la même quantité. Toutefois, ni le brevet FR N° 2 485 974, ni le brevet US N° 3 896 655 ne décrivent des moyens concrets permettant de parvenir à ce résultat.

La présente invention a pour but de fournir, dans un dispositif de serrage et d'arrondissage avec vérins radiaux de poussée, un dispositif simple de commande pour synchroniser les mouvements des tiges de piston des vérins de poussée.

A cet effet, le dispositif selon la présente invention est caractérisé en ce que ladite tige de piston comporte un passage axial qui est raccordé à une source de fluide sous pression et qui débouche dans la face du piston qui est tournée vers l'extrémité interne du cylindre, et en ce que lesdits moyens de commande comprennent un clapet normalement fermé, qui est disposé dans le passage axial de la tige de piston de chaque vérin de poussée, une tige radiale de commande associée à chaque clapet pour ouvrir ce dernier lorsqu'elle est actionnée, ladite tige de commande étant montée coulissante dans l'extrémité interne du cylindre du vérin de poussée coaxialement audit passage, étant en contact à une extrémité avec ledit clapet et ayant une course limitée dans le sens radial vers l'extérieur par rapport au piston du vérin de poussée, une bague montée coulissante sur l'arbre central, plusieurs coins de commande fixés à ladite bague, chaque coin de commande ayant une surface qui est inclinée par rapport à l'axe de l'arbre central et qui est en contact avec l'autre extrémité de l'une des tiges de commande, les surfaces inclinées des coins étant situées sur une surface conique coaxiale à l'arbre central, et au moins un vérin de commande relié à la bague pour déplacer axialement celle-ci avec les coins et, par suite, pour déplacer radialement les tiges de commande en synchronisme.

En outre, selon d'autres aspects de la présente invention qui seront décrits en détail plus loin, le dispositif de serrage et d'arrondissage peut être facilement supporté et positionné à l'intérieur des tubes à rabouter.

D'autres caractéristiques et avantages de la présente invention ressortiront mieux de la description suivante d'une forme préférée d'exécution de la présente invention, donnée à titre d'exemple purement indicatif et nullement limitatif, en référence aux dessins annexés sur lesquels :

Les figures 1a et 1b assemblées suivant la ligne A-A, montrent, en partie en élévation et en partie en coupe axiale, un dispositif de serrage et d'arrondissage conforme à la présente invention.

La figure 2 est une vue en coupe, à plus grande échelle suivant la ligne II-II de la figure 1a.

La figure 3 est une vue en coupe axiale montrant, à plus grande échelle encore, une partie de l'une des deux unités de serrage et d'arrondissage du dispositif représenté sur les figures 1a et 1b.

La figure 4 est un schéma montrant une partie de l'équipement électrique et hydraulique de commande du dispositif des figures 1a et 1b.

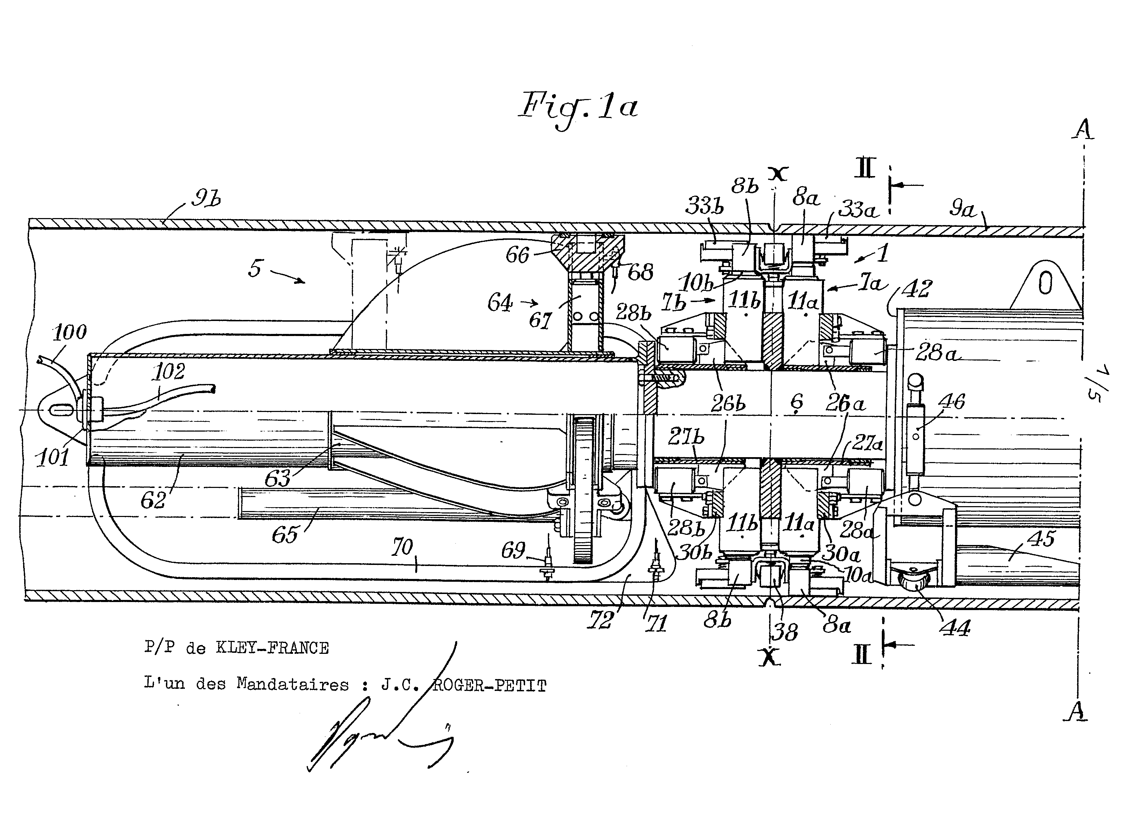

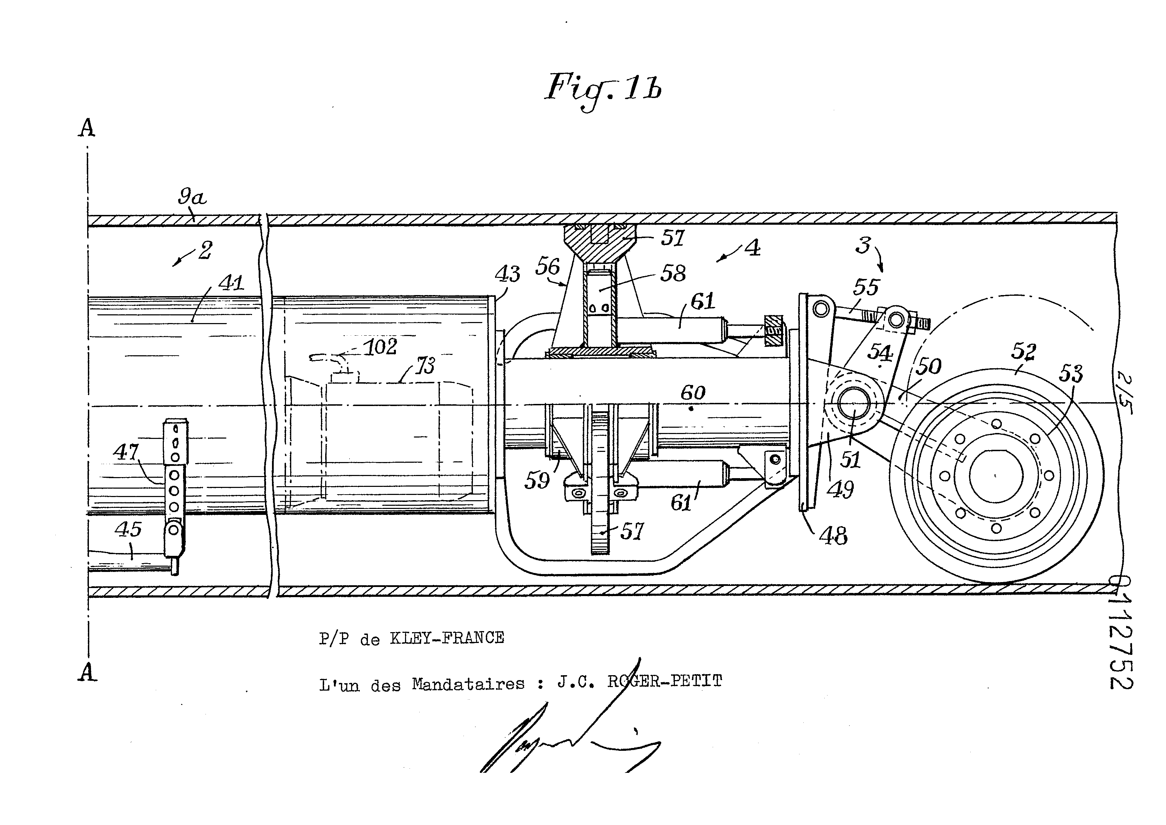

Le dispositif de serrage et d'arondissage représenté sur les figures 1a et 1b comprend plusieurs ensembles, à savoir un ensemble arrondisseur 1, un ensemble central hydraulique 2, un ensemble roue arrière 3 formant avec l'ensemble 2 un chariot de support pour l'ensemble arrondisseur 1, un ensemble mandrin arrière 4 et un ensemble mandrin avant 5. Tous ces ensembles sont conçus sous la forme d'unités séparées pouvant être assemblées coaxialement les unes aux autres comme montré sur les figures 1a et 1b. Ainsi, les ensembles 1, 4 et 5, conçus pour un diamètre de tube donné, peuvent être respectivement remplacés par d'autres ensembles semblables conçus pour un diamètre de tube différent. Bien que dans la figure 1b, l'ensemble 4 soit monté entre les ensembles 2 et 3, il pourrait être éventuellement monté entre les ensembles 1 et 2.

Comme montré sur la figure 1a, l'ensemble arrondisseur 1 comprend un arbre central 6 qui supporte deux unités de serrage et d'arrondissage 7a et 7b disposées symétriquement par rapport au plan médian transversal XX de l'arbre central 6. Les deux unités 7a et 7b sont identiques. On ne décrira donc en détail que l'unité 7a, étant entendu que l'unité 7b comporte les mêmes éléments désignés par les mêmes numéros de référence affectés de la lettre b.

Comme montré sur les figures 1a, 2 et 3, l'unité 7a comporte plusieurs segments de serrage et de mise en forme 8a, par rexemple 9 segments, qui sont répartis circonférentiellement autour de l'axe de l'arbre central 6. Chaque segment 8a a une surface extérieure en forme de portion de cylindre dont le diamètre correspond au diamètre intérieur des tubes 9a et 9b à rabouter. Les surfaces extérieures de tous les segments 8a ont au total une étendue circonférentielle qui est légèrement inférieure à 360°, de telle façon que les segments 8a puissent être appliqués sur la quasi totalité de la circonférence interne du tube 9a.

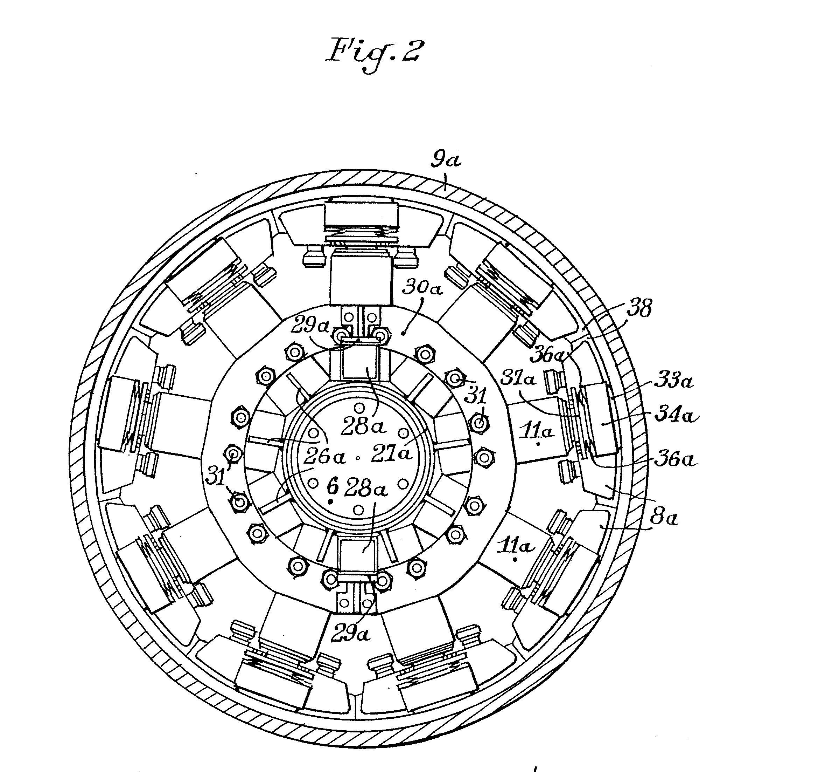

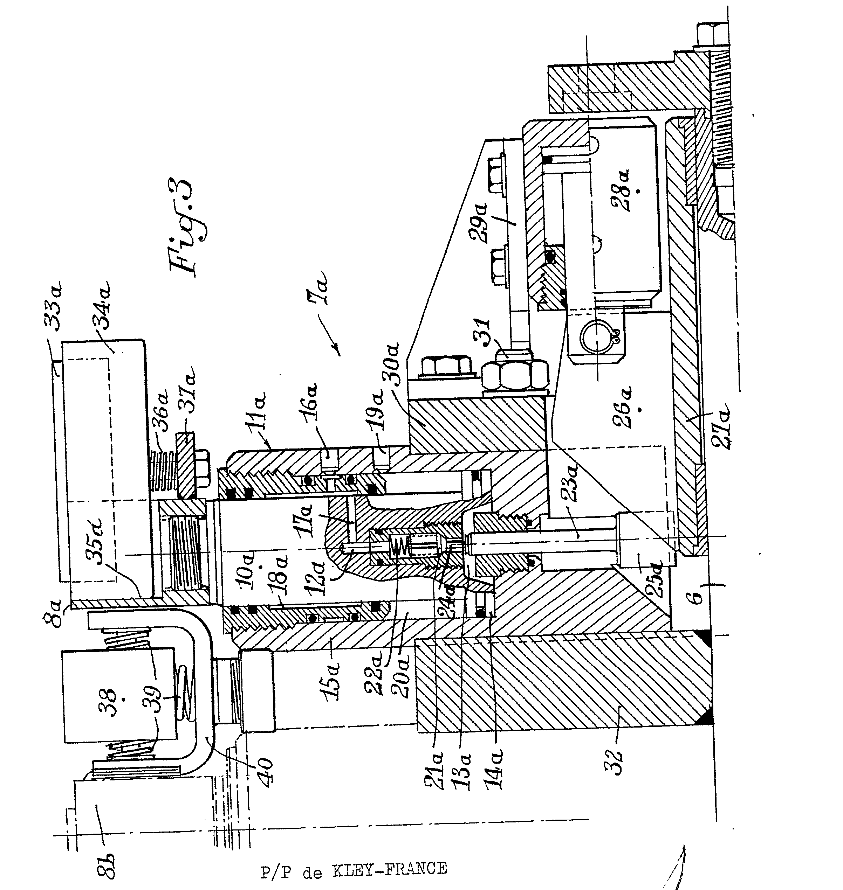

Comme cela est plus particulièrement visible sur la figure 3, chaque segment 8a est fixé à l'une des extrémités d'une tige de piston 10a d'un vérin de poussée 11a disposé radialement par rapport à l'arbre central 6. La tige de piston 10a de chaque vérin 11a comporte un passage axial 12a qui débouche, à une extrémité, dans une cavité 13a formée dans la face du piston 14a tournée vers l'extrémité radialement interne du cylindre 15a du vérin 11a. A son autre extrémité, le passage 12a communique avec un orifice d'admission de fluide sous pression 16a, à travers un ou plusieurs passages radiaux 17a formés dans la tige de piston 10a et une chambre annulaire 18a qui entoure la tige de piston 10a. Un autre orifice d'admission de fluide sous pression 19a communique avec une chambre 20a qui entoure la chambre de piston 10a du côté du piston 14a opposé à la cavité 13a. Les orifices d'admission 16a et 19a peuvent être raccordés sélectivement à une source de fluide sous pression par l'intermédiaire d'une électrovanne à tiroir classique (non montrée). Ainsi, quand l'orifice 16a reçoit du fluide sous pression, la tige de piston 10a est déplacée radialement vers l'extérieur pour appliquer le segment 8a contre la paroi interne du tube 9a comme montré dans la figure 1a, tandis que, quand l'orifice 19a reçoit du fluide sous pression, la tige de piston 10a est déplacée radialement vers l' térieur pour amener le segment 8a dans une position de repos à l'écart de la paroi interne du tube 9a comme montré dans les figures 2 et 3.

Toutefois, pour que les segments 8a de l'unité 7a puissent arrondir le tube 9a en cas de besoin, il faut que tous les segments 8a soient déplacés radialement vers l'extérieur en synchronisme et de la même quantité de mouvement. A cet effet, un clapet 21a, normalement maintenu en position fermée par un ressort 22a est disposé dans le passage axial 12a de la tige de piston 10a de chaque vérin 11a (figure 3). Chaque clapet 21a peut être ouvert par une tige radiale de commande 23a qui est montée coulissante dans l'extrémité radialement interne du cylindre 15a du vérin 11a. La tige de commande

7

0112752

23a est en contact, à une extrémité, avec le clapet 21a et elle a une faible course dans le sens radial vers l'extérieur par rapport au piston 14a, ladite course étant limitée à une valeur correspondant à la tolérance de faux rond pour les tubes à rabouter. A cet effet, comme montré, chaque clapet peut être constitué par une soupape en forme de champignon, dont la tige 24a s'étend axialement dans le passage axial 12a et, dans la position fermée du clapet 21a, fait saillie d'une faible quantité, par exemple d'environ 0,5 mm, dans la cavité 13a. La tige de commande 23a est en contact avec l'extrémité libre de la tige de soupape 24a et elle a un diamètre extérieur plus grand que le diamètre intérieur du passage axial 12a. Ainsi, la course de la tige de commande 23a est limitée à environ 0,5 mm par rapport au piston 14a.

Chaque tige de commande 23a comporte, à son autre extrémité, une tête 25a ayant une surface qui est inclinée de par exemple 45° par rapport à l'axe de l'arbre central 6 et qui est en contact avec une surface inclinée de manière correspondante d'un coin de commande 26a. Les coins de commande 26a sont fixés à une bague 27a qui est montée coulissante sur l'arbre central 6, les surfaces inclinées des coins de commande 26a étant situées sur une surface conique coaxiale audit arbre central. Deux vérins de commande 28a situés en position diamétralement opposée par rapport à l'arbre central 6 ont leurs tiges de piston qui sont reliées respectivement à l'un des coins 26a et à la bague 27a afin de déplacer axialement cette dernière et les coins 26a. Ainsi, lorsque la bague 27a est déplacée par les vérins de commande 28a vers le plan médian transversal XX de l'arbre central 6, les tiges de commande 23a sont déplacées en synchronisme radialement exactement de la même quantité et elles ouvrent les clapets 21a des vérins 11a. Si, à ce moment, les orifices 16a des vérins 11a reçoivent du fluide sous pression, le fluide est admis dans les cavités 13a des vérins 11a, obligeant ainsi les tiges de piston 10a à se déplacer radialement vers l'extérieur. Si, pour une raison quelconque l'une des tiges de piston 10a se déplace radialement vers l'extérieur plus rapidement que les autres tiges de piston, son clapet 21a se refermera et interrompra l'admission du fluide sous pression dans la cavité 13a, arrêtant ainsi le mouvement de sortie de la tige de piston 10a tant que la tige de commande 23a n'aura pas à nouveau ouvert le clapet 21a. On est donc ainsi assuré que toutes les tiges de piston 10a se déplaceront radialement vers l'extérieur en synchronisme et de la même quantité à 0,5 mm près.

Les deux vérins de commande 28a sont fixés à des consoles 29a qui sont elles-mêmes fixées à un anneau 30a. Les vérins de poussée 11a et 11b sont fixés au moyen des anneaux 30a et 30b et au moyen de tirants 31 à une bride circulaire 32 qui est commune à tous les vérins de poussée et qui est soudée à l'arbre central 6 au milieu de la longueur de celui-ci.

Comme cela est plus particulièrement visible dans les figures 2 et 3, à chaque segment 8a (ou 8b) est associée une résistance électrique chauffante 33a montée dans un porte-résistance 34a qui est partiellement engagé dans une cavité 35a du segment 8a correspondant et qui peut glisser radialement dans ladite cavité. Chaque résistance 33a fait radialement saillie au-delà de la surface extérieure du segment 8a correspondant et le porte-résistance 34a est supporté élastiquement par deux ressorts 36a sur une patte de montage 37a soudée sur un côté du segment 8a.

Entre les segments 8a et les segments 8b sont prévus des contre-formes 38, en cuivre, qui sont répartis circonférentiellement et se chevauchent dans le sens circonférentiel, afin de former ensemble un anneau s'étendant sur 360°. Les contre-formes 38 sont destinées à être appliquées contre la paroi cylindrique interne des deux tubes 9a et 9b à l'endroit de leur jonction, afin d'éviter des coulées de métal en fusion à l'intérieur des deux tubes lorsque l'on effectue leur raccordement par soudage. Comme cela est plus particulièrement visible dans la figure 3, chaque contre-forme 38 a une surface extérieure qui est sensiblement au même niveau que la surface extérieure des résistances chauffantes 33a et 33b, et elle est supportée élastiquement par des ressorts 39 dans un étrier 40 dont l'une des branches est fixée par soudage à l'un des segments 8b.

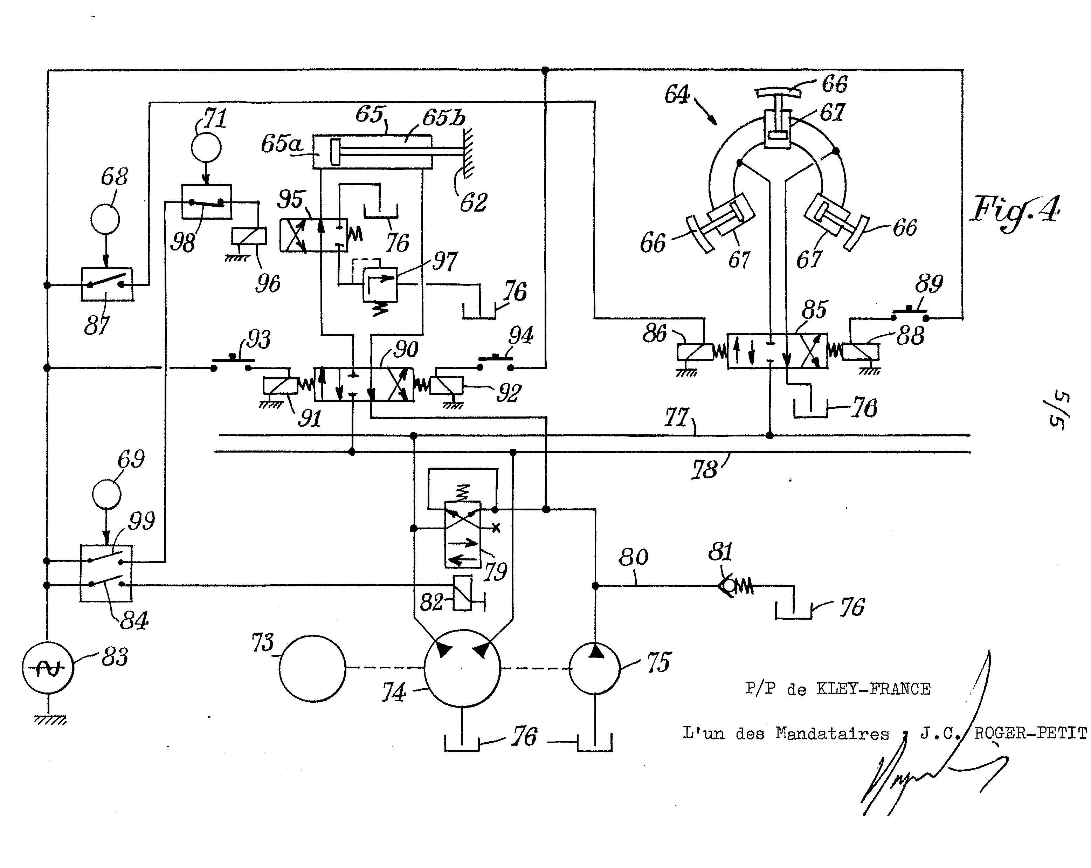

L'ensemble 2 comprend un carter cylindrique 41 qui est fermé à ses deux extrémités par des flasques 42 et 43 et qui contient une centrale hydraulique (moteur électrique, pompes hydrauliques, réservoir de fluide hydraulique, etc..) ainsi que les équipements électriques et hydrauliques de commande (électrovannes) pour commander l'alimentation en fluide sous pression des divers vérins hydrauliques du dispositif de serrage et d'arrondissage de la présente invention. La centrale hydraulique et une partie des équipements électriques et hydrauliques de commande y associés sont montrés dans la figure 4 et seront décrits en détail plus loin. L'arbre central 6 est fixé au flasque d'extrémité 42 coaxialement au carter cylindrique 41. A son extrémité adjacente à l'arbre central 6, le carter 41 est supporté à l'intérieur du tube 9a par deux roulettes 44 (une seule d'entre elles est visible dans la figure 1a). Chaque roulette 44 est portée par un bras de roue 45 qui s'étend sensiblement parallèlement à l'axe du carter 41 et qui est relié à celui-ci par deux tiges 46 et 47 réglables en longueur de façon à permettre un réglage de l'écartement des roulettes 44 par rapport à l'axe du carter 41 et de l'arbre central 6 en fonction du diamètre intérieur des tubes 9a et 9b à rabouter, de telle façon que le carter 41 et l'arbre central 6 soient coaxiaux auxdits tubes.

L'ensemble 3 comporte une plaque 48 munie d'une chape 49. Un bras de roue 50 est monté pivotant dans la chape 49 au moyen d'un axe 51. A son extrémité libre, le bras de roue 50 porte une roue arrière 52. La roue arrière 52 est de préférence une roue motrice, bien que le dispositif de serrage et d'arrondissage de la présente invention pourrait être éventuellement hâlé à l'intérieur des tubes au moyen d'un câble de traction. De préférence, la roue arrière motrice 52 peut être entraînée en rotation, à volonté dans un sens ou dans l'autre, au moyen d'un moteur hydraulique 53 intégré de façon connue dans la roue 52 et pouvant être alimenté en fluide sous pression à partir de la centrale hydraulique contenue dans le carter 41. Comme les bras de roue 45, le bras de roue 50 peut être réglé en direction radiale au moyen d'un bras de levier 54 et d'une tige 55 de longueur réglable, qui est montée entre la plaque 48 et le bras de levier 54, de façon à permettre un réglage de l'écartement de la roue 52 par rapport à l'axe du carter 41 et de l'arbre central 6.

Ainsi, lorsque le moteur hydraulique 53 est actionné le chariot formé par les ensembles 2 et 3 peut être déplacé axialement à l'intérieur des tubes, de façon à amener l'ensemble arrondisseur 1 depuis une jonction qui vient d'être réalisée entre deux tubes jusqu'à la jonction suivante devant être réalisée. Ainsi, le dispositif de serrage et d'arrondissage de la présente invention peut être facilement déplacé à l'intérieur des tubes, quelle que soit la longueur de ceux-ci.

L'ensemble 4 comprend un mandrin arrière 56 permettant de bloquer le chariot 2, 3 dans une position désirée par rapport à l'un des deux tubes à rabouter par exemple le tube 9a. Le mandrin arrière 56 comprend plusieurs mors 57, par exemple trois mors, répartis circonférentiellement autour de l'axe de l'arbre central 6 et mobiles radialement par rapport au chariot 2, 3. Chaque mors peut être actionné par un vérin hydraulique à double effet 58 orienté radialement. Le mandrin arrière 56 est supporté par un manchon 59 dans lequel peut coulisser un deuxième arbre central 60 dont les extrémités sont respectivement fixées au flasque d'extrémité 43 du carter 41 et à la plaque 48 de l'ensemble roue arrière 3, de telle façon que l'arbre 60 soit coaxial à l'arbre central 6. Deux vérins hydrauliques à double effet 61, orientés parallèlement à l'axe de l'arbre 60, sont montés entre le mandrin arrière 56 et l'une des extrémités dudit arbre. Les deux vérins 61, lorsqu'ils sont actionnés et lorsque les mors 57 du mandrin arrière 56 sont serrés contre la paroi interne du tube 9a, permettent de déplacer axialement l'arbre 60 dans un sens ou dans l'autre à l'intérieur du manchon 59 et, par suite, permettent un réglage fin de la position de l'ensemble arrondisseur 1 par rapport à l'extrémité du tube 9a.

Le dispositif de serrage et d'arrondissage de la présente invention qui a été décrit ci-dessus fonctionne de la manière suivante. On supposera tout d'abord que l'extrémité droite (non montrée) du tube 9a a déjà été raccordée aux autres tubes d'un oléoduc ou d'un gazoduc en cours de construction, et que le tube suivant 9b est à raccorder à l'extrémité gauche du tube 9a. Les segments 8a et 8b et les mors 57 sont tout d'abord amenés en position rétractée par les vérins 11a,

11b et 58, respectivement. Ensuite, le moteur hydraulique 53 est actionné pour déplacer le chariot 2, 3, depuis l'extrémité droite jusqu'à l'extrémité gauche du tube 9a et pour positionner grossièrement l'ensemble arrondisseur 1 par rapport à l'extrémité gauche du tube 9a. Les vérins 58 sont alors actionnés pour serrer fermement les mors 57 du mandrin arrière 56 contre la paroi interne du tube 9a. Ensuite, les vérins 61 sont actionnés pour régler de manière précise la position de l'ensemble arrondisseur 1 par rapport à l'extrémité gauche du tube 9a, de telle façon que les contre-formes 38 se trouvent exactement dans le plan de jonction des deux tubes 9a et 9b à rabouter. Ensuite, les vérins 11a et 28a sont actionnés pour serrer fermement les segments 8a contre la paroi interne du tube 9a. Comme les tiges de piston 10a des vérins 11a se déplacent toutes simultanément de la même quantité radiale, à la tolérance de 0,5 mm près, l'extrémité gauche du tube 9a est rendue parfaitement ronde si elle ne l'était pas. En même temps, les résistances électriques chauffantes 33a sont appliquées contre la paroi interne du tube 9a par les ressorts 36a.

Ensuite, le tube 9b est approché du tube 9a par des moyens d'alimentation conventionnels jusqu'à ce que son extrémité droite vienne en contact avec l'extrémité gauche du tube 9a. A ce moment, les vérins 11b et 28b sont actionnés afin de serrer fermement les segments 8b contre la paroi interne du tube 9b. Comme les segments 8a, les segments 8b arrondissent l'extrémité droite du tube 9b si elle n'était pas parfaitement ronde. En même temps, les contre-formes 38 viennent en contact avec la jonction des deux tubes 9a et 9b et les résistances électriques chauffantes 33b sont appliquées contre la paroi interne du tube 9b par les ressorts 36b. A ce moment, les résistances électriques chauffantes 33a et 33b peuvent être alimentées en courant pour chauffer les extrémités adjacentes des tubes 9a et 9b et un cordon de soudure peut être déposé à la jonction des deux tubes pour les raccorder l'un à l'autre. Une fois que les deux tubes ont été ainsi raboutés, le cycle décrit ci-dessus peut être renouvelé pour rabouter le tube suivant à l'extrémité gauche (non montrée) du tube 9b.

L'ensemble mandrin avant 5 n'est pas indispensable dans le cas de la construction d'un oléoduc ou d'un gazoduc à terre, mais il est particulièrement avantageux dans le cas de la construction d'un oléoduc ou d'un gazoduc sous-marin. En effet, dans ce cas particulier, il se pose un problème délicat pour l'accostage du tube 9b au tube 9a. En effet, ce dernier, qui est relié à l'oléoduc ou au gazoduc sous-marin et qui est supporté et guidé dans la partie arrière d'une bague, à tendance à effectuer des mouvements longitudinaux de va-et-vient sous l'action de la houle, de sorte que l'approche du tube 9b, qui est supporté et guidé dans la partie avant de la barge, et la mise en contact de son extrémité droite avec l'extrémité gauche du tube 9a constituent des opérations délicates. L'ensemble mandrin avant 5 permet de faciliter ces opérations d'accostage comme cela va maintenant être décrite.

L'ensemble mandrin avant 5 comprend un troisième arbre central 62, qui est aligné avec l'arbre central 6 et fixé à celui-ci, un manchon 63, qui est monté coulissant sur l'arbre 62, un mandrin avant 64, qui est identique au mandrin arrière 56 et qui est porté par le manchon coulissant 63, et un vérin hydraulique amortisseur 65 dont le cylindre est fixé au mandrin avant 64 et dont la tige de piston est fixée à l'une des extrémités de l'arbre 62. Le vérin 65 est un vérin à double effet permettant aussi de déplacer axialement le manchon 63 et le mandrin avant 64 le long de l'arbre 62 de la position représentée en trait plein sur la figure 1a à la position représentée en trait mixte sur cette même figure.

Le mandrin avant 64 comporte par exemple trois mors 66, chaque mors pouvant être actionné par un vérin à double effet 67.

Le mandrin avant 64 porte un premier détecteur de proximité 68. Un second détecteur de proximité 69 est fixé à une tige de support 70 dont les extrémités recourbées sont respectivement fixées aux extrémités de l'arbre 62. Le deuxième détecteur 69 se trouve dans une position située entre l'arbre 6 et le premier détecteur 68 lorsque le mandrin avant 64 se trouve dans la position représentée en trait mixte sur la figure 1a. Un troisième détecteur de proximité 71 est fixé à une patte de support 72 qui est elle-même fixée à la tige 70, le troisième détecteur 71 se trouvant sensiblement dans un plan correspondant à la jonction des arbres 6 et 62. Chacun des trois détecteurs de proximité 68, 69 et 71 est par exemple constitué par un détecteur photoélectrique et est capable d'émettre un signal lorsqu'il détecte le passage devant lui de l'extrémité droite du tube 9b au cours du mouvement d'approche de ce tube.

Comme montré dans la figure 4, la centrale hydraulique comporte un moteur électrique 73 entraînant une pompe hydraulique double corps 74 et une pompe de gavage 75. La pompe 74 pompe le fluide hydraulique dans un réservoir 76 et alimente en fluide hydraulique sous haute pression (plus de 100 bars) deux lignes distributrices 77 et 78. Une électrovanne 79 à deux positions relie la ligne 77 au réservoir 76 à travers une ligne 80 et un clapet 81 taré à une pression de 6 à 8 bars, lorsque l'électroaimant 82 de l'électrovanne 79 n'est pas excité. Dans ce cas, la ligne 77 est alimentée en fluide sous une pression réduite de 6 à 8 bars. L'électroaimant 82 est relié à une source de courant alternatif 83, de par exemple 48 volts, à travers un interrupteur normalement ouvert 84 qui peut être fermé en réponse au signal de sortie du détecteur de proximité 69.

Les vérins 67 du mandrin avant 64 peuvent être reliés d'un côté à la ligne 77 et de l'autre côté au réservoir 76 au moyen d'une électrovanne 85 à trois positions. L'électroaimant 86 de l'électrovanne 85 est relié à la source de courant 83 à travers un interrupteur normalement ouvert 87, qui peut être fermé en réponse au signal de sortie du détecteur de proximité 68. L'électroaimant 88 de l'électrovanne 85 est relié à la source de courant 83 à travers un contact normalement ouvert 89 du type à bouton-poussoir. Lorsque l'électroaimant 86 est excité, l'électrovanne 85 prend une position telle que les vérins 67 déplacent les mors 66 du mandrin avant 64 radialement vers l'extérieur, tandis que lorsque l'électroaimant 88 est excité, l'électrovanne 85 prend une position telle que les vérins 67 rétractent les mors 66.

Le vérin amortisseur 65 peut être relié d'un côté à la ligne 78 et de l'autre côté à la ligne 80 à travers une électrovanne 90 à trois positions, dont les deux électroaimants 91 et 92 sont reliés à la source de courant 83 respectivement à travers des contacts normalement ouverts 93 et 94 du type à bouton poussoir. Une électrovanne 95 à deux positions permet, lorsque son électroaimant 96 est excité, de mettre la chambre 65a du vérin 65 en communication avec le réservoir 76 à travers un limiteur de pression 97. L'électroaimant 96 est relié à la source de courant 83 à travers un interrupteur normalement fermé 98, qui peut être ouvert en réponse au signal de sortie du détecteur de proximité 71, et à travers un interrupteur normalement ouvert 99, qui peut être fermé en réponse au signal de sortie du détecteur de proximité 69.

Bien que cela ne soit pas représenté sur la figure 4, les lignes 77 et 78 alimentent aussi en fluide sous pression les vérins 11a et 28a de l'unité 7a, les vérins 11b et 28b de l'unité 7b, le moteur hydraulique 53, les vérins 58 du mandrin arrière 56 et les deux vérins 61 à travers des électrovannes à trois positions semblables à l'électrovanne 90, chacune de ces électrovannes étant commandée par des contacts normalement ouverts du type à bouton poussoir qui sont semblables aux contacts 93 et 94. La pompe de gavage alimente en fluide la ligne 80 à une pression qui est alimentée à environ 6 à 8 bars par le clapet taré 81.

On décrira maintenant le fonctionnement de l'ensemble 5 pendant la phase d'accostage du tube 9b dans le cas de la construction d'un oléoduc ou d'un gazoduc sous-marin. On supposera que le dispositif de serrage et d'arrondissage de la présente invention a déjà été amené dans la position représentée sur les figures 1a et 1b, que les segments de l'unité 7a ont déjà été serrés fermement contre la paroi interne du tube 9a et que les segments 8b de l'unité 7b et les mors 66 du mandrin avant 64 sont en position rétractée. Dans ces conditions, avant que le tube 9b soit approché du tube 9a par les moyens d'alimentation prévus sur la bague, le mandrin 64 est monté dans la position représentée en trait mixte sur la figure 1a. Ceci est obtenu en appuyant sur le bouton poussoir du contact 93 afin d'exciter l'électroaimant 91 et de mettre l'électrovanne 90 dans une position telle que la chambre 65a du vérin 65 est alimentée en fluide sous pression par la ligne 78. Le tube 9b est alors approché du tube 9a et, quand l'extrémité droite du tube 9b passe devant le détecteur 68, celui-ci émet un signal qui provoque la fermeture de l'interrupteur 87. Il en résulte que l'électroaimant 86 est excité et que l'électrovanne 85 relie la ligne 77 aux vérins 67 de telle façon que ceux-ci amènent les mors 66 en contact avec la paroi interne du tube 9b. Toutefois, étant donné que, à ce moment, l'électrovanne 79 est dans la position représentée sur la figure 4, la pression du fluide dans la ligne 77 est limitée à une faible valeur par le clapet taré 81, de sorte que les mors 66 sont appliqués seulement avec une faible pression contre la paroi interne du tube 9b, lequel continue à avancer vers le tube 9a en glissant sur les mors 66. Quand l'extrémité droite du tube 9b passe devant le détecteur 69, celui-ci émet un signal qui provoque la fermeture des interrupteurs 84 et 99. Il en résulte que les électroaimants 82 et 96 sont maintenant excités. L'électrovanne 79 coupe la communication entre la ligne 77 et la ligne 80, de sorte que la pression du fluide dans la ligne 77 n'est plus limitée à une faible valeur par le clapet 81, mais est rétablie à une forte valeur (plus de 100 bars), et que les mors 66 sont fermement appliqués par les vérins 67 contre la paroi interne du tube 9b, bloquant ainsi le mandrin 64 par rapport audit tube. En même temps, l'électrovanne 95 relie la chambre 65a du vérin amortisseur 65 au réservoir 76 à travers le limiteur de pression 97, l'autre chambre 65b du vérin amortisseur 65 étant reliée à la pompe de gavage 75 à travers l'électrovanne 90 et une partie de la ligne 80. Dans ces conditions, le tube 9b continue à avancer vers le tube 9a sous l'action des moyens d'alimentation prévus sur la barge, mais ce mouvement d'avance est amorti par la pression régnant dans la chambre 65a du vérin amortisseur 65. De même, si le tube 9a a tendance à se rapprocher du tube 9b sous l'action de la houle, la tige de piston du vérin amortisseur 65 rentre dans le cylindre dudit vérin et ce mouvement est aussi amorti par la pression régnant dans la chambre 65a. La course d'amortissement est d'environ 300 mm, c'est-à-dire la distance entre les détecteurs de proximité 69 et 71, mais cette distance pourrait être plus grande si on le désire. Le détecteur de proximité 71 est lui-même situé à une distance d'environ 300 mm du plan médian transversal XX de l'arbre central 6, c'est-à-dire du plan dans lequel doit être effectuée la jonction des deux tubes 9a et 9b.

Quand l'extrémité droite du tube 9b passe devant le détecteur de proximité 71, celui-ci émet un signal qui provoque l'ouverture de l'interrupteur 98. Ce signal peut être également utilisé pour commander l'arrêt des moyens d'alimentation qui sont prévus sur la barge pour faire avancer le tube 9b. Il en résulte que l'électroaimant 96 est maintenant désexcité et que l'électrovanne 95 revient dans sa position de repos, coupant ainsi la liaison entre la chambre 65a du vérin 65 et le limiteur de pression 97 et interrompant ainsi l'amortissement du vérin 65. A ce moment, les tubes 9a et 9b sont reliés mécaniquement par l'intermédiaire du dispositif de serrage et d'arrondissage de la présent invention et, même si le tube 9a effectue un mouvement longitudinal de va-et-vient sous l'action de la houle, le tube 9b se déplace avec lui sans que cela soit gênant pour la dernière phase d'accostage du tube 9b. Cette dernière phase d'accostage peut être commandée manuellement en appuyant sur le bouton poussoir du contact 94 jusqu'à ce que l'extrémité droite du tube 9b vienne en contact avec l'extrémité gauche du tube 9a. En fermant le contact 94, on excite l'électroaimant 92 qui met l'électrovanne 90 dans une position telle que la chambre 65b du vérin 65 est alimentée en fluide sous pression par la ligne 78. Il en résulte que le cylindre du vérin 65, donc le manchon 63, le mandrin 64 et le tube 9b sont déplacés vers le tube 9a. Après que l'extrémité droite du tube 9b a été ainsi amenée en contact avec l'extrémité gauche du tube 9a, les vérins 11b et 28b de l'unité 7b peuvent être actionnés de la manière précédemment décrite pour serrer fermement les segments 8b contre la paroi interne du tube 9b, et un cordon de soudure peut être déposé à la jonction des deux tubes 9a et 9b pour les raccorder l'un à l'autre.

L'alimentation en courant électrique pour le moteur électrique 73 et pour les diverses électrovannes contenues dans le carter 41 peut être fournie à travers un câble multiconducteur 100 (fig. 1a) qui passe à travers le tube 9b et qui est raccordé par un connecteur multibroche 101 situé à l'extrémité libre de l'arbre 62 à un autre câble multiconducteur 102 qui passe à travers l'arbre 62, qui est creux, et à travers un passage axial prévu dans l'arbre central 6. A leur extrémité du câble multiconducteur 100, certains des conducteurs dudit câble sont reliés à une source de courant pour l'alimentation du moteur 73, d'autres conducteurs dudit câble sont reliés à la source de courant 83, qui peut être ou non la même que la source de courant pour l'alimentation du moteur 73, et d'autres conducteurs encore dutit câble sont reliés à un boîtier de télécommande sur l'une des faces duquel sont disposés les boutons poussoirs des contacts 89, 93 et 94 et des autres contacts commandant les électrovannes associés respectivement aux vérins 11a et 28a de l'unité 7a, aux vérins 11b et 28b de l'unité 7b, au vérin 58 du mandrin 56, au vérin 61 et au moteur hydraulique 53.

Il va de soi que la forme d'exécution de la présente invention qui a été décrite ci-dessus a été donnée à titre d'exemple purement indicatif et nullement limitatif, et que de nombreuses modifications peuvent être apportées facilement à l'homme de l'art sans pour autant sortir du cadre de la présente invention.

DIX-SEPT PAGES.-

P/P de KLEY-FRANCE

L'un des Mandataires : J.C. ROGER-PETIT

— REVENDICATIONS —

1. Dispositif de serrage et d'arrondissage pour le raboutage de tubes (9a, 9b) de gros diamètre, comprenant un arbre central (6) et deux unités de serrage et d'arrondissage (7a et 7b) supportées côte à côte dans le sens axial par l'arbre central, chaque unité (7a, 7b) comportant plusieurs segments de serrage et de mise en forme (8a, 8b), qui sont répartis circonférentiellement autour de l'axe de l'arbre central et qui sont mobiles radialement entre une position interne de repos et une position externe de travail, plusieurs vérins de poussée (11a, 11b) orientés radialement et reliés fonctionnement auxdits segments (8a, 8b), respectivement, pour appliquer à chacun d'eux une poussée dirigée radialement vers l'extérieur et pour les déplacer en synchronisme et de la même quantité de ladite position de repos à ladite position de travail, et des moyens de commande (21a - 28a, 21b - 28b) associés auxdits vérins de poussée pour synchroniser les mouvements de leurs tiges de piston (10a, 10b), chaque vérin de poussée (11a, 11b) comprenant un cylindre (15a, 15b) relié rigidement à l'arbre central (6) et ayant une extrémité radialement interne et une extrémité radialement externe, un piston (14a, 14b) mobile dans le cylindre, et une tige de piston (10a, 10b) montée coulissante dans l'extrémité externe du cylindre et ayant une extrémité interne reliée au piston et une extrémité externe reliée à l'un des segments (8a, 8b) de l'unité correspondante de serrage et d'arrondissage (7a, 7b), caractérisé en ce que ladite tige de piston (10a, 10b) comporte

un passage axial (12a, 12b) qui est raccordé à une source de fluide sous pression (74-78) et qui débouche dans la face du piston (14a, 14b) qui est tournée vers l'extrémité interne du cylindre (15a, 15b), et en ce que lesdits moyens de commande (21a - 28a, 21b - 28b) comprennent un clapet normalement fermé (21a, 21b), qui est disposé dans le passage axial (12a, 12b) de la tige de piston de chaque vérin de poussée, une tige radiale de commande (23a, 23b) associée à chaque clapet pour ouvrir ce dernier lorsqu'elle est actionnée, ladite tige de commande étant montée coulissante dans l'extrémité interne du cylindre (15a, 15b) du vérin de poussée coaxialement audit passage axial, étant en contact à une extrémité avec ledit clapet (21a, 21b) et ayant une course limitée dans le sens radial vers l'extérieur par rapport au piston (14a, 14b) du vérin de poussée, une bague (27a, 27b) montée coulissante sur l'arbre central (6), plusieurs coins de commande (26a, 26b) fixés à ladite bague, chaque coin de commande ayant une surface qui est inclinée par rapport à l'axe de l'arbre central (6) et qui est contact avec l'autre extrémité de l'une des tiges de commande (23a, 23b), les surfaces inclinées des coins de commande étant situées sur une surface conique coaxiale à l'arbre central, et au moins un vérin de commande (28a, 28b) relié à la bague (27a, 27b) pour déplacer axialement celle-ci avec les coins de commande (26a, 26b) et, par suite, pour déplacer radialement les tiges de commande (23a, 23b) en synchronisme.

2. Dispositif selon la revendication 1, caractérisé en ce que chaque clapet (21a, 21b) est constitué par une soupape en forme de champignon, dont la tige (24a, 24b) s'étend radialement dans ledit passage axial (12a, 12b) de la tige de piston (10a, 10b) et, dans la position fermée du clapet, fait saillie d'environ 0,5 mm au-delà de ladite face du piston (14a, 14b), ladite tige de commande (23a, 23b) étant en contact avec l'extrémité libre de la tige de soupape (24a, 24b) et ayant un diamètre extérieur plus grand que le diamètre intérieur dudit passage axial (12a, 12b).

3. Dispositif selon la revendication 1 ou 2, caractérisé en ce que chaque tige de commande (23a. 23b) comporte, à son autre extrémité, une tête (25a, 25b) ayant une surface inclinée en contact avec la surface inclinée de l'un des coins de commande (26a, 26b).

4. Dispositif selon l'une quelconque des revendications 1 à 3, caractérisé en ce qu'il comprend un chariot (2,3) monté sur roues (44, 52) et fixé à l'une des extrémités de l'arbre central (6) pour supporter ce dernier dans l'un (9a) des tubes (9a, 9b) à rabouter.

5. Dispositif selon la revendication 4, caractérisé en ce que le chariot (2, 3) comprend un carter cylindrique (41), qui est coaxial à l'arbre central (6) et qui contient une centrale hydraulique (73-75) pour l'alimentation en fluide sous pression des vérins de poussée (11a, 11b) et des vérins de commande (28a, 28b), ledit carter étant pourvu, à son extrémité adjacente à l'arbre central (6), de deux bras de roues (45-47) munis chacun d'une roue (44) et, à son extrémité opposée, d'un bras de roue (50) portant une roue motrice (52).

6. Dispositif selon la revendication 5, caractérisé en ce que les bras de roue (45-47 et 50) sont réglables en direction radiale pour régler l'écartement des roues (44, 52) par rapport à l'axe du carter (41) et de l'arbre central (6) en fonction du diamètre intérieur des tubes (9a, 9b) à rabouter.

7. Dispositif selon la revendication 5 ou 6, caractérisé en ce qu'il comprend un moteur hydraulique (53) intégré dans la roue motrice (52) pour son entraînement.

8. Dispositif selon l'une quelconque des revendications 4 à 7, caractérisé en ce qu'il comprend un premier mandrin de serrage (56), qui est associé au chariot (2, 3) pour bloquer celui-ci dans une position désirée par rapport à l'un (9a) des tubes à rabouter, et qui comprend plusieurs mors (57) répartis circonférentiellement autour de l'axe de l'arbre central (6) et mobiles radialement par rapport au chariot, et des vérins hydrauliques (58) orientés radialement pour actionner lesdits mors.

9. Dispositif selon la revendication 8, caractérisé en ce qu'il comprend des moyens (59-61) associés au chariot (2,3) et au premier mandrin de serrage (56) pour le réglage fin de la position des segments de serrage et de mise en forme (8a, 8b) des deux unités de serrage et d'arrondissage (7a et 7b) par rapport au plan de jonction des tubes (9a, 9b) à rabouter.

10. Dispositif selon la revendication 9, caractérisé en ce que les moyens de réglage fin (59-61) comprennent un second arbre central (60) qui est fixé au chariot (2, 3) coaxialement à l'arbre central (6) mentionné en premier lieu, un premier manchon (59) qui supporte le premier mandrin de serrage (56) et dans lequel peut coulisser le second arbre central (60), et au moins un vérin hydraulique (61) monté entre le premier mandrin de serrage (56) et l'une des extrémités du second arbre central (60) pour déplacer axialement ce dernier, le chariot (2, 3) et le premier arbre central (6) avec les deux unités de serrage et de mise en forme (7a et 7b) par rapport au premier mandrin de serrage (56) quand les mors (57) de celui-ci sont serrés contre la paroi interne de l'un (9a) des tubes à rabouter.

11. Dispositif selon l'une quelconque des revendications 8 à 10, caractérisé en ce qu'il comprend un troisième arbre central (62) qui est aligné avec le premier arbre central (6) et fixé à l'autre extrémité de celui-ci, un second manchon (63) monté coulissant sur le troisième arbre central, un second mandrin de serrage (64) identique au premier mandrin (56) et porté par le second manchon (63), et un vérin hydraulique amortisseur (65) monté entre le second mandrin (64) et l'une des extrémité du troisième arbre (62) pour amortir la course d'approche de l'autre tube (9b) quand les mors (66) du second mandrin sont serrés contre la paroi interne dudit autre tube.

12. Dispositif selon la revendication 11, caractérisé en ce qu'il comprend un premier détecteur de proximité (68) porté par le second mandrin de serrage (64) pour émettre un signal lorsqu'il détecte le passage devant lui de l'extrémité dudit autre tube (9b) lorsque le second mandrin (64) se trouve dans une position éloignée du premier arbre central (6), des premiers moyens (85-87) réagissant au signal de sortie du premier détecteur (68) pour alimenter en fluide sous faible pression les vérins (67) du second mandrin (64), de façon à amener les mors (66) dudit second mandrin en contact sous faible pression avec la paroi interne dudit autre tube (9b), un second détecteur de proximité (69) fixe par rapport au troisième arbre central (62) et situé entre le premier détecteur (68) et le premier arbre central (6) pour émettre un signal lorsqu'il détecte le passage devant lui de ladite extrémité dudit autre tube (9b), des seconds moyens (79, 82, 84) réagissant au signal de sortie du second détecteur (69) pour alimenter en fluide sous haute pression les vérins (67) du second mandrin (64), de façon à appliquer fermement les mors (66) dudit second mandrin contre la paroi interne dudit autre tube (9b), des troisièmes moyens (95, 96, 98, 99) réagissant au signal de sortie du second détecteur (69) pour relier le vérin amortisseur (65) à un réservoir de fluide (76) à travers un limiteur de pression (97), un troisième détecteur de proximité (71) fixe par rapport au troisième arbre central (62) et situé sensiblement à la jonction entre ce dernier et le premier arbre central (6) pour émettre un signal lorsqu'il détecte le passage devant lui de ladite extrémité dudit autre tube (9b), les troisièmes moyens (95, 96, 98, 99) réagissant au signal de sortie du troisième détecteur 71 pour couper la liaison entre le vérin amortisseur (65) et le limiteur de pression (97), et des quatrièmes moyens (90-94) pour alimenter en fluide sous pression le vérin amortisseur (65) pour terminer l'accostage dudit autre tube (9b) vers le premier tube (9a).

CINQ PAGES.-

P/P de KLEY-FRANCE

L'un des Mandataires : J.C. ROGER-PETIT

**Fig.1a**

# Fig.1b

# Fig.2

*Fig.3*

4/5

0112752

*Fig.4*

5/5

011752

P/P de KLEY-FRANCE

L'un des Mandataires , J.C. ROGER-PETIT

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,A | FR-A-2 485 974 (S.D.E.M.) <br> * Page 10, lignes 2-21 * <br> --- | 1 | B 23 K 37/04 |
| D,A | US-A-3 031 994 (CLARK) <br> * Colonne 1, ligne 52 - colonne 2, ligne 25 * <br> --- | 1 | |
| D,A | US-A-3 896 655 (A.I. WELDERS) <br> * Figure 10 * <br> --- | 1 | |
| D,A | FR-A-2 305 268 (SAIPEM) <br><br> * Figure 7 * <br> --- | | |
| A | FR-A-2 302 816 (MESSER) <br><br> * Page 9; revendications 3-6 * <br> ----- | | **DOMAINES TECHNIQUES RECHERCHES (Int. Cl. 3)** <br><br> B 23 K 37/00 |

Le présent rapport de recherche a été établi pour toutes les revendications

| Lieu de la recherche <br> LA HAYE | Date d'achèvement de la recherche <br> 03-03-1984 | Examinateur <br> HOORNAERT W. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82